# EUROPÄISCHE PATENTSCHRIFT

(11) **EP 0 570 732 B1**
(45) Veröffentlichungstag und Bekanntmachung des Hinweises auf die Patenterteilung: **20.09.1995**
(21) Anmeldenummer: 93106854.8
(22) Anmeldetag: 28.04.1993
(51) Int. Cl.: B60R 11/02

(54) **Befestigungsvorrichtung für Autoradio**
Mounting device for a car radio
Dispositif de fixation pour un autoradio

(30) Priorität: 22.05.1992 DE 9206965 U
(43) Veröffentlichungstag der Anmeldung: 24.11.1993
(73) Patentinhaber: Blaupunkt-Werke GmbH, 31132 Hildesheim (DE)
(72) Erfinder: Keindorff, Matthias, W-3200 Hildesheim (DE); Wolkewitz, Klaus, W-3200 Hildesheim (DE)

(56) Entgegenhaltungen:
- EP-A- 0 182 991
- EP-A- 0 308 052
- US-A- 4 550 944

## Beschreibung

Die Erfindung geht aus von einer Befestigungsvorrichtung für ein Autoradio nach dem Oberbegriff des Anspruchs 1.

Zur Befestigung eines Autoradios in einem vorgegebenen Einbaurahmen sind Rastfedern bekannt, welche seitlich aus dem Gehäuse des Autoradios herausragen und beim Einschieben des Autoradios in den Rahmen zunächst in das Innere des Autoradios gedrückt werden, bis sie hinter dem Einbaurahmen herausspringen und das Autoradio somit arretieren.

Zur Entnahme des Autoradios aus dem Einbaurahmen ist es erforderlich, die Rastfedern nach innen zu drücken. Dazu sind verschiedene Möglichkeiten bekanntgeworden, beispielsweise die Verlängerung der Rastfedern bis unter eine abnehmbare Blende, wo sie von einem Werkzeug ergriffen werden können.

Bei einer anderen bekannten Befestigungsvorrichtung werden die Rastfedern mit Hilfe eines angeschrägten flachen Schlüssels nach innen gedrückt, der durch einen Schlitz in der Blende des Autoradios eingeführt wird und beim Einführen eine entsprechende Kraft auf einen Mitnehmer an der Rastfeder ausübt. Diese bekannte Befestigungsvorrichtung ist allerdings recht aufwendig herzustellen.

Aufgabe der vorliegenden Erfindung ist es, eine Befestigungsvorrichtung für ein Autoradio anzugeben, die preiswert herstellbar ist und bei welcher die Entnahme des Autoradios nur mit einem passenden Schlüssel möglich ist. Außerdem braucht das Gehäuse des Autoradios nicht im einzelnen an die Befestigungsvorrichtung angepaßt zu sein.

Die nach dem kennzeichnenden Teil des Anspruchs 1 erfindungsgemäße Befestigungsvorrichtung hat den Vorteil, daß eine Herstellung aus einem einzigen Blechteil mit wenigen mechanisierten Fertigungsschritten möglich ist.

Ein Ausführungsbeispiel der Erfindung ist in der Zeichnung anhand mehrerer Figuren dargestellt und in der nachfolgenden Beschreibung näher erläutert. Es zeigt:
- Fig. 1: eine erste Befestigungsvorrichtung mit einem teilweise eingeführten Schlüssel,
- Fig. 2: eine zweite Befestigungsvorrichtung, die gegenüber der ersten spiegelbildlich ist, und
- Fig. 3: eine Befestigungsvorrichtung mit Teilen eines Autoradios.

Gleiche Teile sind in den Figuren mit gleichen Bezugszeichen versehen.

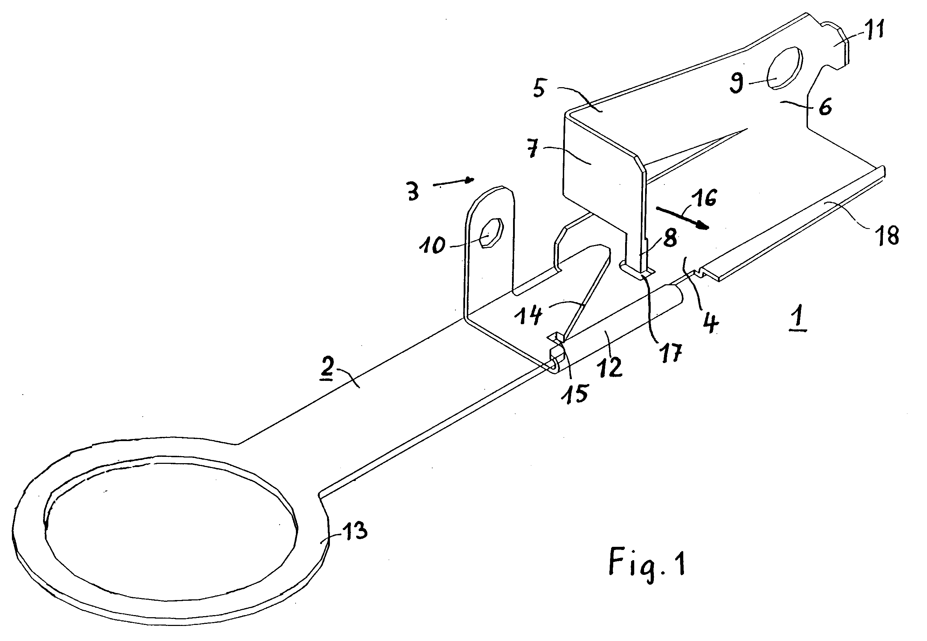

Fig. 1 zeigt eine Befestigungsvorrichtung 1, in welche ein Schlüssel 2 teilweise eingeführt ist. Der Schlüssel 2 ist transparent dargestellt, um von ihm ansonsten verdeckte Teile der Befestigungsvorrichtung 1 zeigen zu können. Die Befestigungsvorrichtung 1 besteht aus einem rechtwinklig gebogenen Blechteil mit einem ersten Schenkel 3 und einem zweiten Schenkel 4. Aus dem ersten Schenkel 3 ist eine Rastfeder 5 herausgestanzt, die ausgehend von einem festen Teil 6 des ersten Schenkels in einem spitzen Winkel nach außen und in einem Endbereich 7 rechtwinklig nach innen gebogen ist. Am Endbereich 7 der Rastfeder 5 ist eine Nase 8 angeordnet, welche unmittelbar über dem zweiten Schenkel 4 endet.

Im ersten Schenkel sind zwei Löcher 9, 10 vorgesehen, die zur Befestigung der erfindungsgemäßen Vorrichtung an einem Seitenteil eines Autoradios mittels Nieten oder Schrauben dienen. Außerdem ist ein weiterer Teil 11 des ersten Schenkels 3 nach innen gebogen und dient zur Fixierung der erfindungsgemäßen Vorrichtung in dem Seitenteil des Autoradios bei der Montage.

Bei 12 ist der Rand des zweiten Schenkels 4 mit einem vorgegebenen Radius um etwa 180° gebogen, wodurch eine Führung für den Schlüssel 2 entsteht. Dieser ist mit einem ringförmigen Griff 13, mit einer Schräge 14 und einer Raste 15 versehen. Eine gestufte Abkantung 18 liegt am Gehäuse des Autoradios strahlungsdicht auf, wenn die Befestigungsvorrichtung in das Autoradio eingebaut ist.

Wie bei den bekannten Befestigungsvorrichtungen wird die Rastfeder 5 beim Einschieben des Autoradios in den Einbaurahmen nach innen in Richtung des Pfeils 16 gedrückt. Hinter dem Einbaurahmen schnellt die Rastfeder 5 wieder nach außen, wodurch eine Arretierung erfolgt. Zum Lösen dieser Arretierung und zum Herausziehen des Autoradios wird bei der erfindungsgemäßen Vorrichtung der Schlüssel 2 von der in Fig. 1 dargestellten Stellung weiter eingeschoben. Dabei gleitet die Nase 8 auf der Schräge 14 und bewegt sich dabei in Richtung des Pfeils 16.

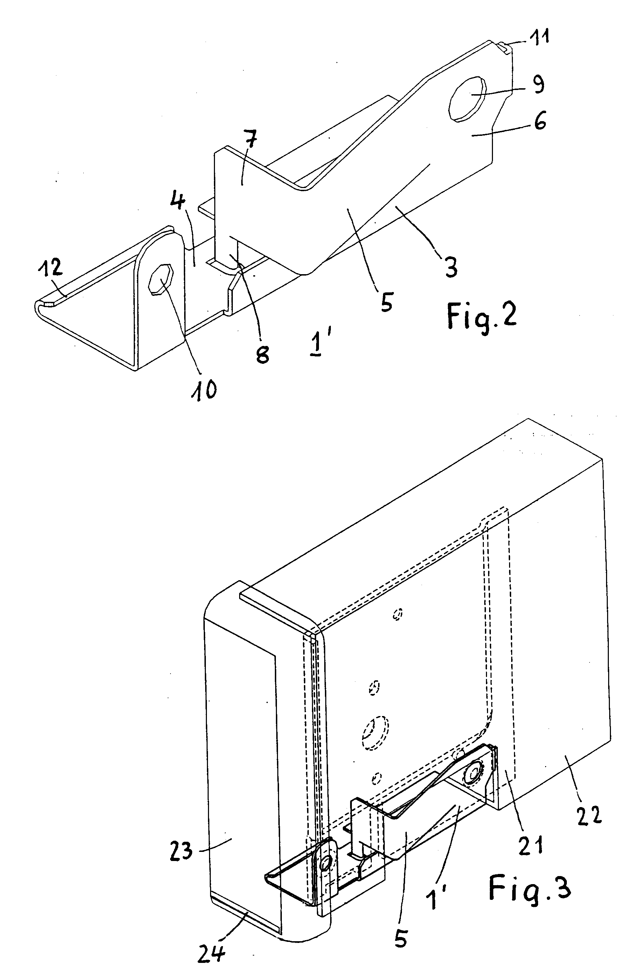

Der Schlüssel 2 wird soweit eingeschoben, bis die Nase 8 in die Raste 15 einfällt. Die Rastfeder 5 ist dann soweit zurückgezogen, daß sie nicht mehr hinter den Einbaurahmen ragt. Das Autoradio kann dann am Schlüssel 2 herausgezogen werden. Die in Fig. 1 dargestellte Vorrichtung 1 ist für die linke Seite des Autoradios vorgesehen, während sich an der rechten Seite die in Fig. 2 dargestellte Vorrichtung 1' befindet. In letztere wird gleichzeitig ein Schlüssel eingeführt, so daß das Autoradio an beiden Schlüsseln herausgezogen werden kann.

Bei der Herstellung der Vorrichtung erfolgt die den ersten und zweiten Schenkel bildende Verformung, nachdem die Rastfeder 5 einschließlich des Endbereichs 7 und der Nase 8 bereits ihre Form erhalten haben. Wegen des Zurückfederns beim Biegen ist eine Verformung über 90° hinaus erforderlich. Damit dieses trotz der Nase 8 möglich ist, ist eine Öffnung 17 im zweiten Schenkel 4 vorgesehen, in welche die Nase 8 beim Biegevorgang vorübergehend eintaucht.

Die in Fig. 2 dargestellte Befestigungsvorrichtung 1' ist gegenüber der in Fig. 1 dargestellten spiegelbildlich. Die entsprechenden Teile sind mit gleichen Bezugszeichen wie in Fig. 1 versehen.

Fig. 3 zeigt eine Befestigungsvorrichtung 1', die an einem rechten Seitenteil 21 eines Autoradios angebracht ist, wobei die Rastfeder 5 im Ruhezustand über eine rechte Seitenwand 22 des Gehäuses des Autoradios hinausragt. In an sich bekannter Weise wird das Autoradio vorn von einer Blende 23 abgeschlossen. Am unteren Rand der Blende sind Schlitze zur Einführung der Schlüssel vorgesehen, wovon in Fig. 3 nur ein Schlitz 24 sichtbar ist.

## Patentansprüche

1. Befestigungsvorrichtung für Autoradio, die eine Führung (12) für einen Flachbandschlüssel und eine senkrecht dazu am Gehäuse befestigte Rastfeder (5) umfaßt, dadurch gekennzeichnet, daß die Feder (5) und die Führung (12) einteilig in einem zwei Schenkel (3,4) aufweisenden, rechtwinklig angebogenen Blechteil eingeformt sind und daß der die Führung (12) tragende Schenkel (4) des Blechteils hinter der Führung eine gestufte Abkantung (18) derart aufweist, daß der Schenkel (4), in einer zugeordneten Ausnehmung im Gehäuse angeordnet, strahlungsdicht an dem Gehäuse aufliegt.

2. Befestigungsvorrichtung nach Anspruch 1, dadurch gekennzeichnet, daß in dem weiteren Schenkel (3) Befestigungslöcher (9, 10) vorgesehen sind.

3. Befestigungsvorrichtung nach Anspruch 2, dadurch gekennzeichnet, daß ein weiterer Teil (7) des weiteren Schenkels (3) rechtwinklig nach innen gebogen ist und eine Nase (8) trägt.

4. Befestigungsvorrichtung nach Anspruch 3, dadurch gekennzeichnet, daß der Schenkel (4) im Bereich der Nase (8) eine Öffnung (17) aufweist.

## Claims

1. Mounting device for a car radio, which comprises a guide (12) for a flat-strip key and a latching spring (5) mounted perpendicular thereto on the housing, characterized in that the spring (5) and the guide (12) are formed in one piece in a rectangularly bent sheet-metal part having two limbs (3, 4) and in that the limb (4) of the sheet-metal part which carries the guide (12) has behind the guide a stepped folded edge (18) such that the limb (4), arranged in an assigned recess in the housing, rests on the housing in a radiation-proof fashion.

2. Mounting device according to Claim 1, characterized in that mounting holes (9, 10) are provided in the further limb (3).

3. Mounting device according to Claim 2, characterized in that a further part (7) of the further limb (3) is bent inwards at right angles and carries a nose (8).

4. Mounting device according to Claim 3, characterized in that the limb (4) has an opening (17) in the region of the nose (8).

## Revendications

1. Dispositif de fixation pour un autoradio comportant un moyen de guidage (12) pour une clé plate et un ressort d'encliquetage (5) fixé perpendiculairement à ce moyen de guidage sur le boîtier, caractérisé en ce que le ressort (5) et le moyen de guidage (12) sont réalisés en une seule pièce dans une partie de tôle repliée à l'équerre, comportant deux branches (3, 4) et la branche (4) de la pièce de tôle qui porte le moyen de guidage (12) présente derrière le moyen de guidage, une partie repliée (18), à gradin, de façon que la branche (4) s'appuie dans une cavité correspondante du boîtier, de manière occultée contre le boîtier.

2. Dispositif de fixation selon la revendication 1, caractérisé en ce que des trous de fixation (9, 10) sont prévus dans l'autre branche (3).

3. Dispositif de fixation selon la revendication 2, caractérisé en ce qu'une autre partie (7) de l'autre branche (3) est repliée vers l'intérieur, à l'équerre et porte un bec (8).

4. Dispositif de fixation selon la revendication 3, caractérisé en ce que la branche (4) comporte une ouverture (17) au niveau du bec (8).
